# EUROPEAN PATENT SPECIFICATION

(11) **EP 2 685 174 B1**
(45) Date of publication and mention of the grant of the patent: **11.01.2017**
(21) Application number: 12175897.3
(22) Date of filing: 11.07.2012
(51) Int. Cl.: F24D 10/00, F24D 19/00, F24D 19/10

(54) **Heat transfer module and method related thereto**
Wärmeübertragungsmodul und dazugehöriges Verfahren
Module de transfert de chaleur et procédé associé

(43) Date of publication of application: 15.01.2014
(73) Proprietor: Alfa Laval Corporate AB, 221 00 Lund (SE); Alfa Laval Hes, 69210 Lentilly (FR)
(72) Inventor: Perrin, Matthieu, 69008 Lyon (FR)
(74) Representative: Alfa Laval Attorneys

(56) References cited:
- EP-A1- 2 383 523
- EP-A2- 2 154 436

## Description

### Technical field

The invention relates to the field of heating systems for transmitting heat energy to a heating facility. Said energy may in fact be used to heat a building or a complex of buildings but also to heat domestic hot water, which will be distributed within said building or buildings.

The invention relates more specifically to the field of heating facilities, in which there is an independent energy generation source in the building provided with the heating facility, so as to save on the thermal energy supplied by the public heating network. Said building may further be an office or residential block. Thus, the heating facility may comprise an energy generation source transmitting heat to a plurality of heating substations and/or domestic hot water initiators fitted to each company or living unit respectively in the building.

### Prior art

Facilities are known wherein the public heating network is arranged hydraulically in parallel with a heating facility comprising in particular an independent heat generation source. Said heat generation source may come in various forms and in particular use renewable or recovery energies, i.e. energies that are inexpensive or even free of charge. Independent heat generation sources are thus known that use solar or heat pump, geothermal power or a recovery fuel such as household waste or plants. This independent heat generation source may also use a liquid or gas fuel in the manner of a conventional boiler or a fuel cell.

When the energy generated by the independent heat generation source is sufficient to allow the fluid flowing in the heating facility to reach its threshold temperature, the heat exchange is stopped between a first fluid flowing in the public network and a second fluid of the heating facility. An example of such a facility is disclosed in EP 2 383 523 A1.

As a result, if the independent heat generation source uses solar energy, the domestic hot water, and/or the heating, may be generated during the hours of sunshine. However, in some cases, the temperature of the second fluid of the heating facility may increase very significantly, particularly in summer. Such overheating of the second fluid may prove problematic since it may debase the intrinsic technical characteristics of the second fluid. It may then be necessary to cool the second fluid during the hours of night-time by causing it to flow in the solar panels. This then serves to discharge the heat energy of the second fluid into the atmosphere.

A first objective of the invention is therefore to allow the energy generated by the independent heating facility not to be wasted. In this way, the energy efficiency thereof is improved.

Another objective is not to debase the technical characteristics of the fluid flowing in the independent heat generation source, by preventing the overheating thereof.

With a facility of this kind the solar panels are also required to be under-dimensioned so as to limit the amount of thermal energy harnessed for said facility.

Conversely, with this type of facility the size of the storage tanks which are generally dimensioned as a function of the maximum summer solar input is required to be over-dimensioned.

Thus, another objective is not to limit the size of the means for harnessing the energy generated by the independent heat generation source, such as solar panels, or to reduce the size of the storage tanks, in which the fluid flowing in the solar panel transmits its heat energy.

### Disclosure of the invention

The invention therefore relates to a module for transferring heat between a public heating network and a heating facility comprising at least one independent heat generation source. Said module comprises a heat exchanger connected to two fluid circuits and wherein a first fluid of the public heating network transmits thermal energy to a second fluid of the heating facility.

According to the invention, this heat transfer module is characterised in that it comprises reversible means for ad hoc the direction of heat transfer of the thermal energy between the two fluid circuits, a first direction of heat transfer for transmitting, in the heat exchanger, the thermal energy of the first fluid to the second fluid, and a second direction of heat transfer for transmitting, in the heat exchanger, the thermal energy of the second fluid to the first fluid.

In other words, the heat transfer module allows the thermal energy generated by a heating facility and in particular by an independent heat generation source, to be used to reheat the first fluid flowing in the circuit of the public heating network. Thus, the first fluid is tapped at a cold return loop of the public heating network and is then re-injected into a hot loop. A heat transfer module of this kind can thus be used to "resell" energy generated locally in a network-connected heating facility to a public heating network.

A heat transfer module of this kind then guarantees optimum use of the independent heat generation source but it also allows the constraints of said independent heat generation source to be limited particularly in terms of the dimensions of the energy-harnessing means, such as solar panels, or of the size of the storage tanks it comprises.

According to a first embodiment, the reversible means may invert, in at least one of the two fluid circuits, the entrance and the exit in the heat exchanger for transmitting, in the heat exchanger, the thermal energy of the second fluid to the first fluid.

In other words, the reversible means allow, in the heat exchanger, the same direction of flow of both fluids for transmitting the thermal energy of the first fluid to the second fluid or for transmitting the thermal energy of the second fluid to the first fluid.

In that case, the reversible means may comprise at least two valves for preventing the first fluid from flowing in a first direction of flow for transmitting, in the heat exchanger, the thermal energy of the first fluid to the second fluid.

Said valves may come in various forms and particularly be of the 2-way or 3-way type. Said valves are advantageously controlled electrically but other, and in particular manual, control means may be used.

Thus, according to a second embodiment, the reversible means may invert ad hoc the direction of flow of the first fluid in the heat exchanger, a first direction of flow of the first fluid for transmitting, in the heat exchanger, the thermal energy of the first fluid to the second fluid, and a second direction of flow of the first fluid for transmitting, in the heat exchanger, the thermal energy of the second fluid to the first fluid.

Advantageously, the reversible means may comprise at least a valve for preventing the first fluid from flowing in the first direction of flow. Said valve may also come in various forms and particularly be of the 2-way or 3-way type. Said valve is advantageously controlled electrically but other, and in particular manual, control means may be used.

In practice, the reversible means may comprise a first check valve arranged hydraulically in series with the valve, this first check valve allowing the first fluid to flow solely in the first direction of flow.

In other words, when the valve is open, the first fluid is able to flow in the first direction of flow inside the heat exchanger while also passing through the first check valve of the transfer module.

Furthermore, the valve and the check valve may be positioned equally well upstream and downstream of the heat exchanger.

Thus, according to a first embodiment, the valve and the first check valve are arranged upstream and downstream respectively of the heat exchanger in the first direction of flow of the first fluid.

As a result, the first fluid, when it flows in the first direction of flow, first passes through the valve, then the heat exchanger and then the first check valve.

Conversely, and according to a second embodiment, the valve and the first check valve may be arranged downstream and upstream respectively of the heat exchanger in the first direction of flow.

In this case, the first fluid, when it flows in the first direction of flow, passes first into the first check valve, and then into the heat exchanger and into the valve.

According to a particular embodiment, the reversible means may comprise a second check valve arranged on a first bypass branch hydraulically in parallel relative to the valve, this second check valve allowing the first fluid to flow solely in the second direction of flow short-circuiting the valve when it prevents the first fluid from flowing in the first direction of flow.

In other words, when the valve is closed, the direction of flow of the first fluid may be reversed allowing the first fluid to flow in the second direction of flow by passing through this first bypass branch comprising the second check valve.

Advantageously, the reversible means may comprise a third check valve arranged on a second bypass branch hydraulically in parallel relative to the first check valve, this third check valve allowing the first fluid to flow solely in the second direction of flow short-circuiting the first check valve.

As previously, when the valve is closed, the first fluid is able to flow in the second direction of flow passing through the second bypass branch including the third check valve.

In practice, the reversible means may comprise a pump allowing the first fluid to flow in the second direction of flow.

In other words, to allow the first fluid to flow in the second direction of flow, it may be advantageous to fit a pump to the heat transfer module tapping the first fluid in the cold loop of the public network in order to re-inject it in the hot loop of this network.

Said pump may be presented in different ways. It may in particular be a fixed or variable delivery pump. Said pump may also have a high total dynamic head adapted to the pressure difference of the first fluid between the cold and hot loops of the public heating network.

Furthermore, said pump may also be associated with a 3-way mixing valve for changing its delivery. Likewise, a pump may also be associated with a 3-way distribution valve to allow control of pump delivery.

The pump may be positioned in the transfer module in various ways, and in particular it may be arranged upstream or downstream of the heat exchanger in the first direction of flow of the first fluid.

Thus, in a first embodiment, the pump may be arranged on the first bypass branch hydraulically in series with the second check valve.

In this way, the first fluid, when it flows in the second direction of flow, passes through the second bypass branch, then the heat exchanger by being sucked up by the pump arranged on the first bypass branch.

According to a second embodiment, the pump may be arranged on the second bypass branch hydraulically in series with the third check valve.

In this case, when the first fluid flows in the second direction of flow, it passes through the pump at low temperature since it has not yet been reheated in the heat exchanger. Said positioning of the pump is consequently advantageous since it means that materials can be used that are adapted to the temperature of the first fluid on the cold loop of the public network.

Advantageously, the reversible means may comprise a volume flow meter for measuring the volume of first fluid flowing in the second direction of flow.
Said volume flow meter thus allows the owner or manager of the heating facility to get accurate information about the quantity of first fluid flowing in the second direction of flow. It is then possible to determine the quantity of thermal energy supplied by the heating facility to the public heating network.

In practice, the volume flow meter may be arranged on the second bypass branch hydraulically in series with the third check valve. Indeed, in this case, the first fluid is at the temperature of the return loop of the public network and is not yet reheated by the heat exchanger. Said positioning is advantageous since it means that materials can be used that are adapted to the temperature of the first fluid in the cold loop of the public network.

According to a particular embodiment, the reversible means may comprise a control unit capable of generating a valve and/or pump control instruction.

Said arrangement in fact allows fully automated control of valve opening and closure and/or of pump start-up or shutdown so that the first fluid can flow in the second direction of flow. The control unit may in this case use a plurality of temperature sensors to generate this control instruction. Said temperature sensors are in particular arranged on the public heating network, in the heating facility but also on the building in which the heating facility is fitted so as to measure the outside environmental temperature.

Advantageously, the reversible means may comprise temperature sensors measuring the temperatures T₁ and T₂ respectively of the second fluid at the heat exchanger output and input and a temperature sensor measuring the temperature T₅ of the first fluid in a hot loop of the public heating network.

Indeed, these temperature sensors make it possible to identify both the quantity of heat requirement of the heating facility, the quantity of available heat supplied by the independent energy generation source and the actual temperature level of the hot loop of the public heating network.

The invention also relates to the method for reversing ad hoc the direction of flow of the first fluid in the heat exchanger by means of the module previously described. Said method is characterised in that it has the steps comprising:
- comparing the temperatures T₁ and T₂ of the second fluid at the heat exchanger output and input respectively relative to threshold values Tₜₕ₁ and Tₜₕ₂;
- comparing the temperature T₂ of the second fluid with the temperature of the first fluid T₅ in the hot loop of the public heating network;
- generating the valve and/or pump control instruction so as to reverse ad hoc the direction of flow of the first fluid in the heat exchanger.

In practice, the direction of flow of the first fluid in the heat exchanger can then be reversed ad hoc when the temperature T₁ is higher than the threshold value Tₜₕ₁, and when the temperature T₂ is simultaneously higher than the threshold value Tₜₕ₂ and the temperature T₅ of the first fluid. Such a threshold value Tₜₕ₂ may be constant or variable and chosen, for example, equal to the temperature T₁ of the second fluid at the heat exchanger output.

A time delay can be used to overcome any one-off and short term problems that may be generated by regulation loops.

In other words, when the temperatures of the second fluid at the heat exchanger input and output are higher than threshold values Tₜₕ₁ and Tₜₕ₂ and when the temperature T₂ of the second fluid at the heat exchanger input is also higher than the temperature of the first fluid T₅ in the hot loop of the public network, the control unit generates an instruction for closing the valve, thereby preventing the first fluid from flowing in the first direction of flow, and/or for activating the pump allowing the first fluid to flow in the second direction of flow between the cold loop and the hot loop of the public heating network.

According to a particular embodiment, the valve and/or pump control instruction is a function of the temperature T₁ of the second fluid at the heat exchanger output and of a temperature T₃ of the first fluid measured by a temperature sensor arranged at the heat exchanger input in the first direction of flow of the first fluid.

The temperature T₃ of the first fluid re-injected into the public heating network can then be controlled by means of a temperature sensor arranged at the heat exchanger input in the first direction of flow of the first fluid.

Said temperature T₃ may in particular be a function of the temperature T₅ of the first fluid in the hot loop of the public network upstream of the diversion for supplying first fluid to the heat transfer module and/or as a function of a temperature T₇ of the first fluid in the hot loop of the public network downstream of the diversion for supplying first fluid to the heat transfer module.

Furthermore, it may be advantageous to position a pressure sensor hydraulically in series and in proximity to the temperature sensor measuring the temperature T₃ of the first fluid. Said pressure sensor thereby restricts disturbance to pressure on the public network when reversing ad hoc the direction of flow of the first fluid in the heat exchanger.

### Brief description of the figures

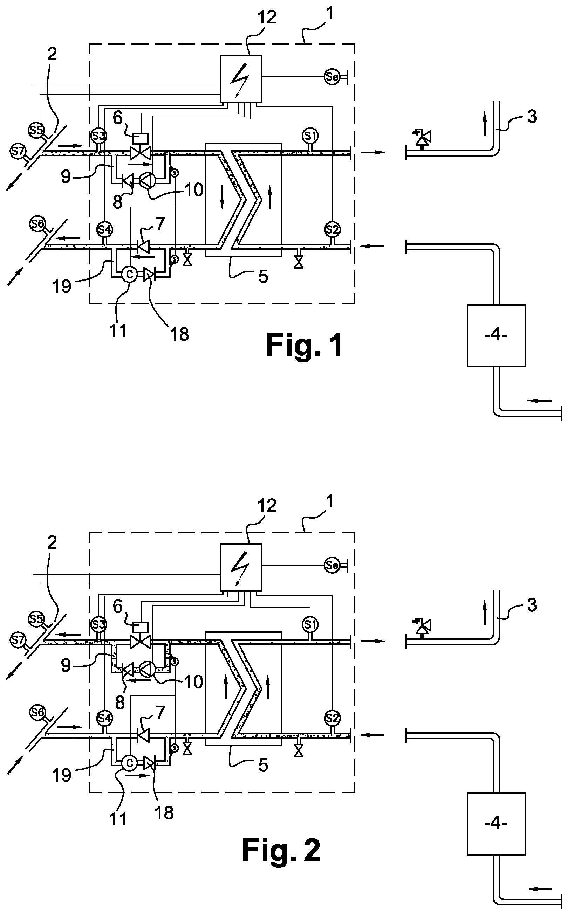

The manner in which the invention may be embodied, as well as the resulting advantages, will become clear from the description of the following embodiment, given by way of information but non-restrictively, supported by figures 1 to 13 which show diagrammatically various heat transfer module alternatives, in accordance with the invention.

### Detailed description of the invention

As already mentioned, the invention relates to a module for transferring heat between a public heating network and a heating facility.

As shown in figure 1, the heat transfer module **1** is therefore positioned between a public heating network **2** and a heating facility **3** comprising at least one independent heat generation source **4** arranged upstream of the heat transfer module in the direction of flow of the second fluid of the heating facility **3.**

Said heat transfer module **1** further comprises a heat exchanger **5** in which the first fluid flowing in the public heating network **2** transmits its heat to the second fluid.

Furthermore, according to the invention, said heat transfer module **1** comprises reversible means for reversing ad hoc the direction of flow of the first fluid in the heat exchanger **5.** In this way, it is possible to transmit the heat of the second fluid coming from the independent heat generation source **4** to the first fluid inside the heat exchanger **5.**

Said reversible means comprise in particular a valve **6** which as shown in figure 1 may be 2-way and controlled electrically by means of a control unit **12.** When said valve **6** is open, the first fluid is then able to flow in a first direction of flow and pass through a first check valve **7** before returning to the public heating network **2.** As shown here, the valve **6** is positioned upstream of the heat exchanger **5** in the first direction of flow of the first fluid. The first check valve **7** is for its part arranged downstream of the heat exchanger **5** in the same first direction of flow of the first fluid.

In this case, the second fluid receives the heat supplied by the public heating network **2.**

As shown in figure 2, when the control unit **12** generates the control instruction for closing the valve **6,** the direction of flow of the first fluid may be reversed so as to flow in a second direction of flow. In this case, the first fluid is tapped in the cold return loop of the public heating network **2,** and it is then reheated in the heat exchanger **5** before being sent back into the hot loop of the public network **2.**

To do this, a first bypass branch **9** is used to circumvent the valve **6** and a second bypass loop **19** is used to circumvent the first check valve **7.** In some special cases, a differential pressure valve (not shown) may be arranged hydraulically in series with the valve **6,** the first bypass branch **9** also serving to circumvent this differential pressure valve.

Furthermore, and as shown, the reversible means may also comprise a pump **10** so as to increase the pressure of the first fluid tapped in the cold return loop of the public heating network **2.** Furthermore, a second check valve **8** allows the first fluid to flow in this bypass branch **9** solely in the second direction of flow. Likewise, a third check valve **18** also allows the first fluid to flow in the second bypass branch **19** solely in the second direction of flow of the first fluid.

Various temperature sensors may be fitted to the heating facility, the heat transfer module and the public heating network so as to adapt the control instruction of the valve 6 and the pump **10.**

Thus, temperature sensors **S₁** and **S₂** are used to measure the temperature **T₁** and **T₂** of the second fluid at the output and input respectively of the heat exchanger **5.** Likewise, temperature sensors **S₃** and **S₄** are used to measure the temperature **T₃** and **T₄** of the first fluid at the input and output respectively of the heat exchanger **5** in the first direction of flow of the first fluid.

Moreover, temperature sensors **S₅** and **S₇** are used to measure the temperature **T₅** and **T₇** of the first fluid in the hot loop of the public network **2** upstream and downstream respectively of the bypass for supplying first fluid to the heat transfer module **1** in the first direction of flow of the first fluid.

Likewise, a temperature sensor **S₆** is used to measure the temperature **T₆** of the first fluid in the cold loop of the public network **2** downstream of the bypass allowing the first fluid to be recovered after it has passed through the heat transfer module **1** in the first direction of flow of the first fluid.

The valve and/or pump control instruction generated by the control unit **12** may thus be a function of the temperatures **T₃** and **T₁** supplied by the temperature sensors **S₃** and **S₁.** Likewise, the temperature **T₃** may be a function of the temperatures **T₅** or **T₇** supplied by the temperature sensors **S₅** and **S₇**.

Furthermore, the reversible means may also comprise a volume flow meter **11** so as to measure the volume of the first fluid tapped on the cold return loop of the public network **2** and reheated inside the heat exchanger **5** by means of the independent heat generation source **4.**

According to another embodiment (not shown in figure 1 and 2), the at least one independent heat generation source **4** may be arranged downstream of the heat transfer module **1** in the direction of flow of the second fluid of the heating facility **3.** This embodiment may be advantageous for some rules and technical reasons.

Then, as the generation source **4** could be arranged upstream or downstream **3,** the heat generation source **4** will not be shown in the following figures.

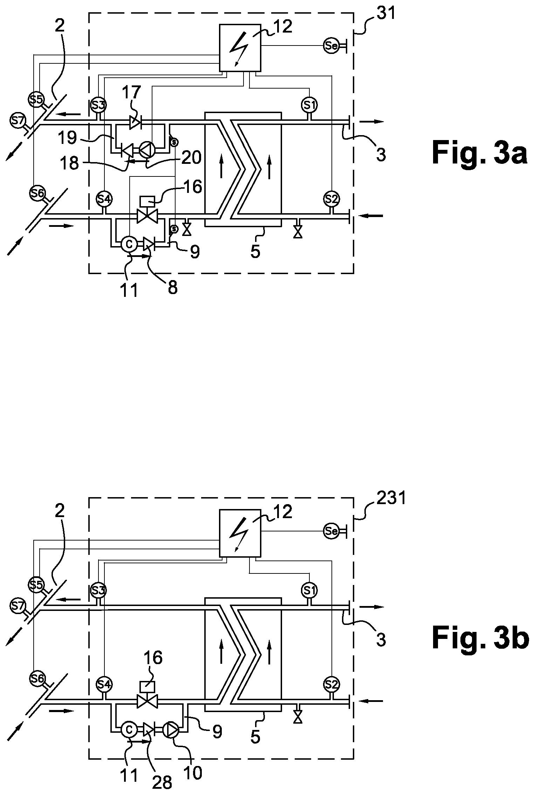

As shown in figure 3a, the heat transfer module **31** may comprise reversible means wherein a 2-way valve **16** is arranged downstream of the first heat exchanger **5** in the first direction of flow of the first fluid.

In this case, the first bypass branch **9** is also positioned downstream of the heat exchanger **5** in the first direction of flow of the first fluid. The volume flow meter **11** is then positioned on the first bypass branch **9.**

Conversely, the second check valve **17** is for its part positioned upstream of the heat exchanger **5** in the first direction of flow of the first fluid. Furthermore, the pump **20** is in this case positioned on the second bypass branch **19** so that the second check valve **17** is short-circuited.

Said pump **20** may advantageously be a variable delivery pump so as to regulate heat energy transmission inside the heat exchanger **5.**
As shown in figure 3b, the heat transfer module **231** may comprise reversible means wherein a 2-way valve **16** is arranged downstream of the first heat exchanger **5** in the first direction of flow of the first fluid.

In this case, the first bypass branch **9** is used to circumvent the valve **16.** The volume flow meter **11** is then positioned on the first bypass branch **9.** Furthermore, a check valve **28** and a pump **10** allow the first fluid to flow in this bypass branch **9** solely in the second direction of flow.

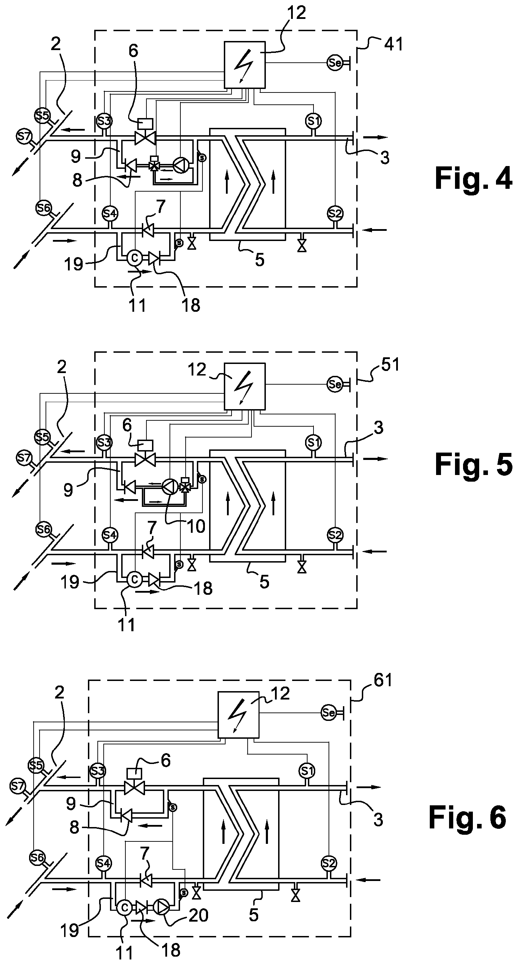

As shown in figure 4, said pump **10** may also be associated with a 3-way distribution valve. The pump **10** may in this case be a fixed or variable speed delivery pump and achieve the same flow rate control of the first fluid flowing in the heat exchanger in the second direction of flow.

As shown in figure 5, the 3-way valve may also be arranged downstream of the pump **10** in the second direction of flow of the first fluid inside the first bypass branch **9.** Said 3-way valve is then known as a mixing valve. As previously, the pump **10** may in this case be a fixed or variable speed pump.

As shown in figure 6, the heat transfer module **61** may comprise reversible means wherein the pump **20** is arranged on the second bypass branch **19.** In this case, the pump **20** is then passed through by a first fluid at low temperature since it has not yet flowed through the heat exchanger **5.**

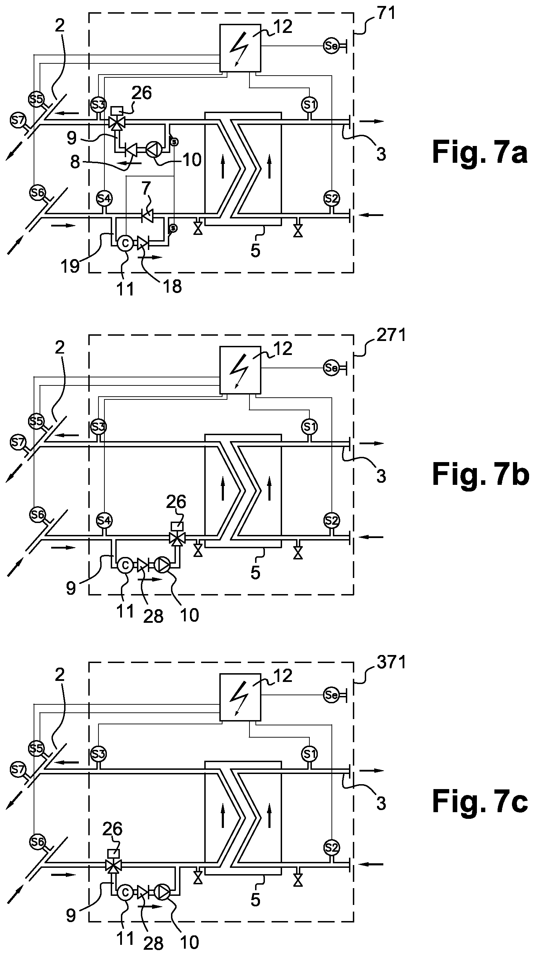

As shown in figure 7a, the heat transfer module **71** may for its part comprise reversible means wherein a 3-way valve **26** is used to select directly the first or second direction of flow of the first fluid. Said 3-way valve **26** is positioned upstream of the heat exchanger **5** in the first direction of flow of the first fluid and may then be positioned at the input or output of the first bypass branch **9.**

As shown in figures 7b and 7c, heat transfer module **271** and **371** may comprise reversible means wherein said 3-way valve **26** is positioned downstream of the heat exchanger **5** in the first direction of flow of the first fluid may then be positioned at the output (figure 7b) or at the input (figure 7c) of the first bypass branch **9.**

In these two cases, the first bypass branch **9** is used to circumvent a straight tube. The volume flow meter **11,** a check valve **28** and a pump **10** are then positioned on the first bypass branch **9.** Thus, the check valve **28** allows the first fluid to flow in this bypass branch **9** solely in the second direction of flow.

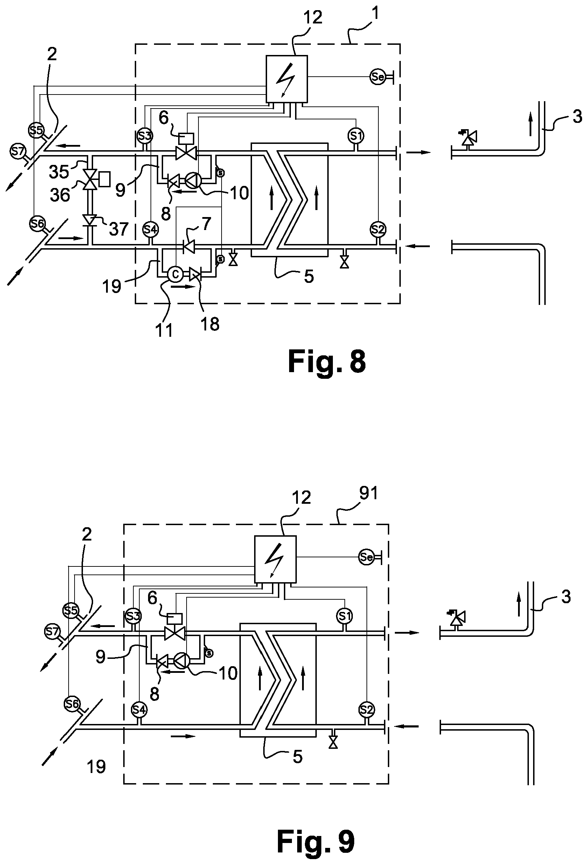

As shown in figure 8, the public heating network **2** may comprise a bypass branch **35** for short-circuiting the heat transfer module **1.** Indeed, when the valve **36** is open it allows the first fluid to pass directly from the hot loop to the cold loop of the public heating network **2.** Furthermore, a check valve **37** is used to prevent the first fluid from flowing in the reverse direction in the bypass branch **35.**

Conversely, when the valve **36** is closed, the first fluid is then able to pass through the heat exchanger **5** in the first or second direction of flow. Furthermore, when the pump **10** is activated in order to cause the first fluid to flow in the second direction of flow, it is essential for the valve **36** to be closed in order to prevent a closed-cycle of the first fluid in the heat transfer module **1.**

As shown in figure 9, when it is not useful to measure the volume of first fluid flowing in the second direction of flow, the heat transfer module **91** may be without a volume flow meter. In this case too, neither the second bypass branch, nor the first and third check valves are useful to the smooth operation of the reversible means for reversing the direction of flow of the first fluid inside the heat exchanger **5.**

When a volume flow meter is not required the valve **6** and the first bypass branch **9** may be arranged equally well upstream or downstream of the heat exchanger in the first direction of flow of the first fluid.

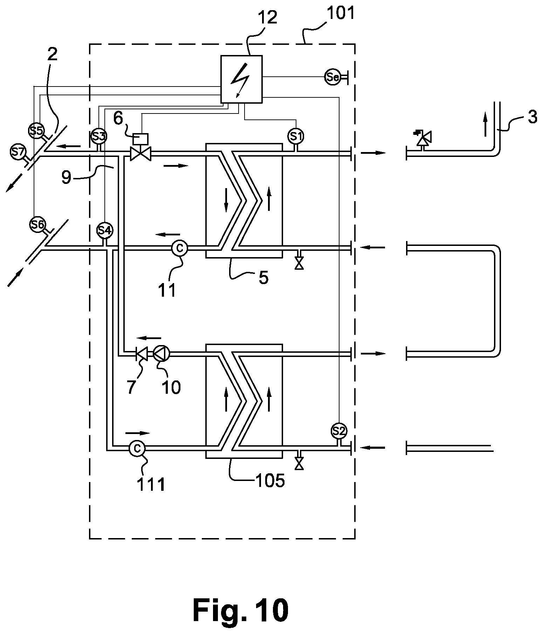

As shown in figure 10, the heat transfer module **101** may also comprise a second heat exchanger **105** in which the first fluid flowing in the public heating network **2** transmits its heat to the second fluid.

Furthermore, the reversible means may also comprise a second volume flow meter **111** so as to measure the volume of the first fluid tapped on the cold return loop of the public network **2** and reheated inside the heat exchanger **105** by means of the independent heat generation source.

Thus, the efficiency on the global heat exchange is increased by adding the second heat exchanger **105** in a counter current way. Indeed the second heat exchanger **105** is arranged on a bypass branch hydraulically in parallel relative to the heat exchanger **5,** the valve **6** and the volume flow meter **11.**

As already mentioned, and according to the description of figure 4 and 5, the pump **10** may in particular be a fixed or variable delivery pump, having a 3-way mixing or distribution valve, and may be arranged upstream or downstream of the heat exchanger **105** in the first direction of flow of the first fluid.

Likewise, the first check valve **7** may be arranged upstream or downstream of the heat exchanger **105** in the first direction of flow of the first fluid.

When the control unit **12** generates the control instruction for closing the valve **6,** the direction of flow of the first fluid may be reversed so as to flow in a second direction of flow. In this case, the first fluid is tapped in the cold return loop of the public heating network **2,** and it is then reheated only in the heat exchanger **105** before being sent back into the hot loop of the public network **2.**

Then, the heat exchanger **105** is used to circumvent the heat exchanger **5** when the valve **6** is closed.

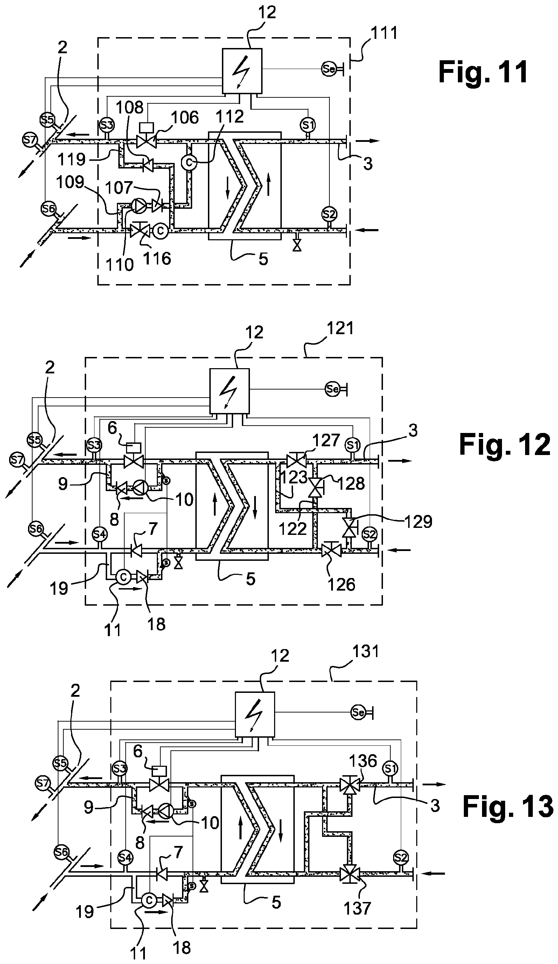

As shown in figure 11, the heat transfer module **111** may comprise reversible means wherein a first 2-way valve **106** is arranged upstream of the first heat exchanger **5** in the first direction of flow of the first fluid and a second 2-way valve **116** is arranged downstream of the first heat exchanger **5** in the first direction of flow of the first fluid.

In this case, a first bypass branch **109** allows inverting the output with the input of the heat exchanger **5.** A second bypass branch **119** allows inverting the input with the output of the heat exchanger **5.** Then, the direction of heat transfer may be inverted in the heat exchanger **5** without inverting the direction of flow of the first fluide in the heat exchanger **5.**

When the control unit **12** generates the control instruction for closing the valves **106** and **116,** the direction of flow of the first fluid may be reversed so as to flow in a second direction of flow outside the heat exchanger **5.** In this case, the first fluid is tapped in the cold return loop of the public heating network **2,** and it is then reheated in the heat exchanger **5** before being sent back into the hot loop of the public network **2.**

Thus, in that case, the reversible means invert, in the first fluid circuit, the entrance and the exit in the heat exchanger for transmitting, in the heat exchanger, the thermal energy of the second fluid to the first fluid.

The volume flow meter **112,** a first check valve **107** and a pump **110** are then positioned on the first bypass branch **109.**

Conversely, a second check valve **108** is in this case positioned on the second bypass branch **119.**

Said pump **110** may advantageously be a variable delivery pump so as to regulate heat energy transmission inside the heat exchanger **5.** Naturally, and according to the description of figure 4 and 5, the pump **110** may in particular be a fixed or variable delivery pump, having a 3-way mixing or distribution valve, and may be arranged upstream or downstream of the heat exchanger **5** in the first direction of flow of the first fluid.

As shown in figure 12, the heat transfer module **121** may comprise, as the heat transfer module **1** of figure 1 and 2, reversible means for reversing ad hoc the direction of flow of the first fluid in the heat exchanger **5.** The transfer module **121** comprises also reversible means wherein a first 2-way valve **126** is arranged downstream of the heat exchanger **5** in a first direction of flow of the second fluid, a second 2-way valve **127** is arranged upstream of the heat exchanger **5** in a first direction of flow of the second fluid, a third 2-way valve **128** is arranged on a first bypass branch 122 and a forth 2-way valve **129** is arranged on a second bypass branch 123.

When the control unit **12** generates the control instruction for closing the valves **126** and **127** and opening the valves **128** and **129,** the direction of flow of the second fluid may be also reversed so as to flow in a second direction of flow inside the heat exchanger **5.** The first fluid is still tapped in the cold return loop of the public heating network **2,** and it is then reheated in the heat exchanger **5** before being sent back into the hot loop of the public network **2.**

Thus, in that case, the reversible means invert, in the two fluid circuits, the entrance and the exit in the heat exchanger **5** for transmitting, in the heat exchanger **5,** the thermal energy of the second fluid to the first fluid.

As shown in figure 13, the heat transfer module **131** may comprise, as the heat transfer module **121** of figure 12, reversible means for reversing ad hoc the direction of flow of the first fluid in the heat exchanger **5.** The transfer module **131** comprises also reversible means wherein a first 3-way valve **136** is arranged uptream of the heat exchanger **5** in the first direction of flow of the second fluid and a second 3-way valve **137** is arranged downstream of the heat exchanger **5** in the first direction of flow of the second fluid.

When the control unit **12** generates the control instruction for changing the state of two 3-way valves **136** and **137,** the direction of flow of the second fluid may be also reversed so as to flow in a second direction of flow inside the heat exchanger **5.**

So, the reversible means invert, in the two fluid circuits, the entrance and the exit in the heat exchanger **5** for transmitting, in the heat exchanger **5,** the thermal energy of the second fluid to the first fluid.

It is clear from what has been said above that the heat transfer module and the method for reversing ad hoc the direction of flow of the first fluid in the exchanger have a large number of advantages, and in particular:
- they allow an improvement in the efficiency of the heat exchange generated by the independent heat generation source of the heating facility;
- they also make it possible not to limit the surface of solar panels used in the heating facility;
- they make it possible not to reheat the atmosphere during the night by causing the second fluid to flow inside the solar panels;
- they allow a reduction in the storage volume of energy generated by the independent energy generation source without fear of any overheating or an emergency shutdown;
- they allow the user of the heating facility to resell a significant quantity of his unused generated thermal energy and as a result to pay off his facility more quickly.

## Claims

1. Module for heat transfer (1, 31, 41, 51, 61, 71, 91, 101, 111, 121, 131) between a public heating network (2) and a heating facility (3) comprising at least one independent heat generation source (4), said module (1, 31, 41, 51, 61, 71, 91, 101, 111, 121, 131, 231, 271, 371) comprising a heat exchanger (5) connected to two fluid circuits and wherein a first fluid of the public heating network (2) transmits thermal energy to a second fluid of the heating facility (3), said module (1, 31, 41, 51, 61, 71, 91, 101, 111, 121, 131, 231, 271, 371) being **characterised in that** it comprises reversible means for inverting ad hoc the direction of heat transfer of the thermal energy between the two fluid circuits, a first direction of heat transfer for transmitting, in the heat exchanger (5), the thermal energy of the first fluid to the second fluid, and a second direction of heat transfer for transmitting, in the heat exchanger (5), the thermal energy of the second fluid to the first fluid.

2. Module as claimed in claim 1, **characterised in that**, the reversible means invert, in at least one of the two fluid circuits, the input and the output on the heat exchanger for transmitting, in the heat exchanger, the thermal energy of the second fluid to the first fluid.

3. Module as claimed in claim 2, **characterised in that** the reversible means comprise at least two valves (126-129, 136, 137) for preventing the second fluid from flowing in a first direction of flow for transmitting, in the heat exchanger (5), the thermal energy of the first fluid to the second fluid.

4. Module as claimed in claim 1, **characterised in that** the reversible means invert ad hoc the direction of flow of the first fluid in the heat exchanger (5), a first direction of flow of the first fluid for transmitting, in the heat exchanger (5), the thermal energy of the first fluid to the second fluid, and a second direction of flow of the first fluid for transmitting, in the heat exchanger (5), the thermal energy of the second fluid to the first fluid.

5. Module as claimed in claim 4, **characterised in that** the reversible means comprise at least a valve (6, 16, 26, 106, 116) for preventing the first fluid from flowing in said first direction of flow.

6. Module as claimed in claim 5, **characterised in that** the reversible means comprise a first check valve (7, 17) arranged hydraulically in series with the valve (6, 16, 26), said first check valve (7, 17) allowing the first fluid to flow solely in the first direction of flow.

7. Module as claimed in claims 5 and 6, **characterised in that** the valve (6, 26) and the first check valve (7) are arranged upstream and downstream respectively of the heat exchanger (5) in the first direction of flow of the first fluid.

8. Module as claimed in claims 5 and 6, **characterised in that** the valve (16) and the first check valve (17) are arranged downstream and upstream respectively of the heat exchanger (5) in the first direction of flow of the first fluid.

9. Module as claimed in claim 5, **characterised in that** the reversible means comprise a second check valve (8) arranged on a first bypass branch (9) hydraulically in parallel relative to the valve (6, 16), said second check valve (8) allowing the first fluid to flow solely in said second direction of flow short-circuiting the valve (6, 16) when it prevents the first fluid from flowing in the first direction of flow.

10. Module as claimed in claim 6, **characterised in that** the reversible means comprise a third check valve (18) arranged on a second bypass branch (19) hydraulically in parallel relative to said first check valve (7, 17), said third check valve (18) allowing the first fluid to flow solely in said second direction of flow short-circuiting the first check valve (7, 17).

11. Module as claimed in claim 4, **characterised in that** the reversible means comprise a pump (10, 20, 110) allowing the first fluid to flow in said second direction of flow.

12. Module as claimed in claims 9 and 11, **characterised in that** the pump (10) is arranged on the first bypass branch (9) hydraulically in series with the second check valve (8).

13. Module as claimed in claims 10 and 11, **characterised in that** the pump (20) is arranged on the second bypass branch (19) hydraulically in series with the third check valve (18).

14. Module as claimed in claim 4, **characterised in that** the reversible means comprise a volume flow meter (11, 112) for measuring the volume of first fluid flowing in the second direction of flow.

15. Module as claimed in claims 10 and 14, **characterised in that** said volume flow meter (11) is arranged on the second bypass branch (19) hydraulically in series with the third check valve (18).

16. Module as claimed in at least one of claims 3, 5 and 11, **characterised in that** the reversible means comprise a control unit (12) capable of generating a valve (6, 16, 26, 106, 116, 126-129, 136, 137) and/or pump (10, 20,110) control instruction.

17. Module as claimed in claim 1, **characterised in that** the reversible means comprise temperature sensors (S₁) and (S₂) measuring the temperatures T₁ and T₂ respectively of the second fluid at the heat exchanger (5) output and input and a temperature sensor (S₅) measuring the temperature T₅ of the first fluid in a hot loop of the public heating network (2).

18. Method for reversing ad hoc the direction of heat transfer of the thermal energy between the two fluid circuits in the heat exchanger (5) by means of a module (1, 31, 41, 51, 61, 71, 91, 101, 111, 121, 131, 231, 271, 371) as claimed in any one of the previous claims, said method being **characterised in that** it has the steps comprising:
- comparing the temperatures T₁ and T₂ of the second fluid at the heat exchanger (5) output and input respectively relative to threshold values Tₜₕ₁ and Tₜₕ₂;
- comparing the temperature T₂ of the second fluid with the temperature of the first fluid T₅ in the hot loop of the public heating network (2);
- generating the valve (6, 16, 26) and/or pump (10, 20) control instruction so as to reverse ad hoc the direction of heat transfer of the thermal energy in the heat exchanger (5) and change the direction of the heat transfer in the heat exchanger (5) in the second direction of heat transfert.

19. Method as claimed in claim 18, **characterised in that** the direction of heat transfer in the heat exchanger (5) is reversed ad hoc when said temperature T₁ is higher than the threshold value Tₜₕ₁, and when the temperature T₂ is simultaneously higher than the threshold value Tₜₕ₂ and the temperature T₅ of the first fluid.

20. Method as claimed in at least one of the claims 18 and 19, **characterised in that** the valve (6, 16, 26, 126-129, 136, 137) and/or pump (10, 20, 110) control instruction is a function of the temperature T₁ of the second fluid at the heat exchanger (5) output and of a temperature T₃ of the first fluid measured by a temperature sensor (S₃) arranged at the heat exchanger (5) input in the first direction of flow of the first fluid.

21. Method as claimed in claim 20, **characterised in that** valve (6, 16, 26, 126-129, 136, 137) and/or pump (10, 20, 110) control instruction is a function of the temperature T₇ of the first fluid measured by a temperature sensor (S₇) arranged in the hot loop of the public network **2** downstream the bypass for supplying first fluid to the heat transfer module **1** in the first direction of flow of the first fluid.

## Patentansprüche

1. Wärmeübertragungsmodul (1, 31, 41, 51, 61, 71, 91, 101, 111, 121, 131) zwischen einem öffentlichen Heizungsnetzwerk (2) und einer Heizanlage (3) umfassend mindestens eine unabhängige Wärmeerzeugungsquelle (4), das Modul (1, 31, 41, 51, 61, 71, 91, 101, 111, 121, 131, 231, 271, 371) umfassend einen Wärmetauscher (5) verbunden mit zwei Fluidkreisläufen, und wobei ein erstes Fluid des öffentlichen Heizungsnetzwerks (2) Wärmeenergie an ein zweites Fluid der Heizanlage (3) überträgt, wobei das Modul (1, 31, 41, 51, 61, 71, 91, 101, 111, 121, 131, 231, 271, 371) **dadurch gekennzeichnet ist, dass** es umkehrbare Mittel zum Invertieren ad hoc der Richtung der Wärmeübertragung der Wärmeenergie zwischen den zwei Fluidkreisläufen, eine erste Richtung der Wärmeübertragung zum Übertragen der Wärmeenergie des ersten Fluids zum zweiten Fluid im Wärmetauscher (5), und eine zweite Richtung der Wärmeübertragung zum Übertragen der Wärmeenergie vom zweiten Fluid zum ersten Fluid im Wärmetauscher (5) umfasst.

2. Modul nach Anspruch 1, **dadurch gekennzeichnet, dass** die umkehrbaren Mittel in mindestens einem der zwei Fluidkreisläufe den Einlass und den Auslass am Wärmetauscher zum Übertragen der Wärmeenergie des zweiten Fluids zum ersten Fluid im Wärmetauscher invertieren.

3. Modul nach Anspruch 2, **dadurch gekennzeichnet, dass** die umkehrbaren Mittel mindestens zwei Ventile (126-129, 136, 137) umfassen, um zu verhindern, dass das zweite Fluid in eine erste Strömungsrichtung strömt, um im Wärmetauscher (5) die Wärmeenergie des ersten Fluids zum zweiten Fluid zu übertragen.

4. Modul nach Anspruch 1, **dadurch gekennzeichnet, dass** die umkehrbaren Mittel ad hoc die Strömungsrichtung des ersten Fluids im Wärmetauscher (5), eine erste Strömungsrichtung des ersten Fluids zum Übertragen der Wärmeenergie des ersten Fluids zum zweiten Fluid im Wärmetauscher (5), und eine zweite Strömungsrichtung des ersten Fluids zum Übertragen der Wärmeenergie des zweiten Fluids zum ersten Fluid im Wärmetauscher (5) invertieren.

5. Modul nach Anspruch 4, **dadurch gekennzeichnet, dass** die umkehrbaren Mittel mindestens ein Ventil (6, 16, 26, 106, 116) umfassen, um zu verhindern, dass das erste Fluid in die erste Strömungsrichtung strömt.

6. Modul nach Anspruch 5, **dadurch gekennzeichnet, dass** die umkehrbaren Mittel ein erstes Rückschlagventil (7, 17) umfassen, die hydraulisch in Reihe mit dem Ventil (6, 16, 26) angeordnet sind, wobei das erste Rückschlagventil (7, 17) ein Strömen des ersten Fluids nur in die erste Strömungsrichtung zulässt.

7. Modul nach den Ansprüchen 5 und 6, **dadurch gekennzeichnet, dass** das Ventil (6, 26) und das erste Rückschlagventil (7) vor- bzw. nachgeschaltet in Bezug auf den Wärmetauscher (5) in der ersten Strömungsrichtung des ersten Fluids angeordnet sind.

8. Modul nach den Ansprüchen 5 und 6, **dadurch gekennzeichnet, dass** das Ventil (16) und das erste Rückschlagventil (17) vor- bzw. nachgeschaltet in Bezug auf den Wärmetauscher (5) in der ersten Strömungsrichtung des ersten Fluids angeordnet sind.

9. Modul nach Anspruch 5, **dadurch gekennzeichnet, dass** die umkehrbaren Mittel ein zweites Rückschlagventil (8) umfassen, das in einer ersten Bypass-Leitung (9) hydraulisch parallel in Bezug auf das Ventil (6, 16) angeordnet ist, wobei das zweite Rückschlagventil (8) ein Strömen des ersten Fluids nur in die zweite Strömungsrichtung zulässt, indem es das Ventil (6, 16) kurzschließt, wenn es verhindert, dass das erste Fluid in die erste Strömungsrichtung strömt.

10. Modul nach Anspruch 6, **dadurch gekennzeichnet, dass** die umkehrbaren Mittel ein drittes Rückschlagventil (18) umfassen, das in einer zweiten Bypass-Leitung (19) hydraulisch parallel in Bezug auf das erste Rückschlagventil (7, 17) angeordnet ist, wobei das dritte Rückschlagventil (18) ein Strömen des ersten Fluids nur in die zweite Strömungsrichtung zulässt, indem es das erste Rückschlagventil (7, 17) kurzschließt.

11. Modul nach Anspruch 4, **dadurch gekennzeichnet, dass** die umkehrbaren Mittel eine Pumpe (10, 20, 110) umfassen, die ein Strömen des ersten Fluids in die zweite Strömungsrichtung zulässt.

12. Modul nach den Ansprüchen 9 und 11, **dadurch gekennzeichnet, dass** die Pumpe (10) in der ersten Bypass-Leitung (9) hydraulisch in Reihe mit dem zweiten Rückschlagventil (8) angeordnet ist.

13. Modul nach den Ansprüchen 10 und 11, **dadurch gekennzeichnet, dass** die Pumpe (20) in der zweiten Bypass-Leitung (19) hydraulisch in Reihe mit dem dritten Rückschlagventil (18) angeordnet ist.

14. Modul nach Anspruch 4, **dadurch gekennzeichnet, dass** die umkehrbaren Mittel einen Volumenstrommesser (11, 112) zum Messen des Volumens des ersten Fluids, das in die zweite Strömungsrichtung strömt, umfassen.

15. Modul nach den Ansprüchen 10 und 14, **dadurch gekennzeichnet, dass** der Volumenstrommesser (11) in der zweiten Bypass-Leitung (19) hydraulisch in Reihe mit dem dritten Rückschlagventil (18) angeordnet ist.

16. Modul nach mindestens einem der Ansprüche 3, 5 und 11, **dadurch gekennzeichnet, dass** die umkehrbaren Mittel eine Steuereinheit (12) umfassen, die in der Lage ist, eine Regelanweisung für das Ventil (6, 16, 26, 106, 116, 126-129, 136, 137) und/oder die Pumpe (10, 20,110) zu erzeugen.

17. Modul nach Anspruch 1, **dadurch gekennzeichnet, dass** die umkehrbaren Mittel Temperaturfühler (S₁) und (S₂) umfassen, die die Temperaturen T₁ bzw. T₂ des zweiten Fluids am Auslass und Einlass des Wärmetauschers (5) messen, und einen Temperaturfühler (S₅), der die Temperatur T₅ des ersten Fluids in einer Warmschleife des öffentlichen Heizungsnetzwerks (2) misst.

18. Verfahren zum Umkehren ad hoc der Richtung der Wärmeübertragung der Wärmeenergie zwischen den zwei Fluidkreisläufen im Wärmetauscher (5) mittels eines Moduls (1, 31, 41, 51, 61, 71, 91, 101, 111, 121, 131, 231, 271, 371) nach einem der vorherigen Ansprüche, wobei das Verfahren **dadurch gekennzeichnet ist, dass** es Schritte hat, umfassend:
- Vergleichen der Temperaturen T₁ und T₂ des zweiten Fluids am Auslass bzw. Einlass des Wärmetauschers (5) mit den Schwellenwerten Tₜₕ₁ und Tₜₕ₂;
- Vergleichen der Temperatur T₂ des zweiten Fluids mit der Temperatur des ersten Fluids T₅ in der Warmschleife des öffentlichen Heizungsnetzwerks (2);
- Erzeugen der Regelanweisung für das Ventil (6, 16, 26) und/oder die Pumpe (10, 20), um ad hoc die Richtung der Wärmeübertragung der Wärmeenergie im Wärmetauscher (5) umzukehren und um die Richtung der Wärmeübertragung im Wärmetauscher (5) in der zweiten Richtung der Wärmeübertragung zu ändern.

19. Verfahren nach Anspruch 18, **dadurch gekennzeichnet, dass** die Richtung der Wärmeübertragung im Wärmetauscher (5) ad hoc umgekehrt wird, wenn die Temperatur T₁ höher als der Schwellenwert Tₜₕ₁ ist, und wenn die Temperatur T₂ gleichzeitig höher als der Schwellenwert Tₜₕ₂ und die Temperatur T₅ des ersten Fluids ist.

20. Verfahren nach mindestens einem der Ansprüche 18 und 19, **dadurch gekennzeichnet, dass** die Regelanweisung für das Ventil (6, 16, 26, 126-129, 136, 137) und/oder die Pumpe (10, 20, 110) eine Funktion der Temperatur T₁ des zweiten Fluids am Auslass des Wärmetauschers (5) und einer Temperatur T₃ des ersten Fluids, gemessen durch einen Temperaturfühler (S₃), angeordnet am Einlass des Wärmetauschers (5) in der ersten Strömungsrichtung des ersten Fluids, ist.

21. Verfahren nach Anspruch 20, **dadurch gekennzeichnet, dass** die Ventil- (6, 16, 26, 126-129, 136, 137) und/oder Pumpen- (10, 20, 110) Regelanweisung eine Funktion der Temperatur T₇ des ersten Fluids, gemessen durch einen Temperaturfühler (S₇), angeordnet in der Warmschleife des öffentlichen Netzwerks 2 nach dem Bypass zum Zuführen des ersten Fluids zum Wärmeübertragungsmodul 1 in der ersten Strömungsrichtung des ersten Fluids, ist.

## Revendications

1. Module de transfert de chaleur (1,31, 41, 51, 61, 71, 91, 101, 111, 121, 131) entre un réseau de chauffage public (2) et une installation de chauffage (3) comprenant au moins une source de génération de chaleur (4) indépendante, ledit module (1, 31, 41, 51, 61, 71, 91, 101, 111, 121, 131, 231, 271, 371) comprenant un échangeur de chaleur (5) raccordé à deux circuits de fluide et dans lequel un premier fluide du réseau de chauffage public (2) transmet de l'énergie thermique à un deuxième fluide de l'installation de chauffage (3), ledit module (1, 31, 41, 51, 61, 71, 91, 101, 111, 121, 131, 231, 271, 371) étant **caractérisé en ce qu'**il comprend des moyens réversibles permettant d'inverser de manière appropriée la direction du transfert de chaleur de l'énergie thermique entre les deux circuits de fluide, une première direction de transfert de chaleur permettant de transmettre, au sein de l'échangeur de chaleur (5), l'énergie thermique du premier fluide au deuxième fluide, et une deuxième direction de transfert de chaleur permettant de transmettre, au sein de l'échangeur de chaleur (5), l'énergie thermique du deuxième fluide au premier fluide.

2. Module selon la revendication 1, **caractérisé en ce que** les moyens réversibles inversent, dans au moins un des deux circuits de fluide, l'entrée et la sortie sur l'échangeur de chaleur afin de transmettre, au sein de l'échangeur de chaleur, l'énergie thermique du deuxième fluide au premier fluide.

3. Module selon la revendication 2, **caractérisé en ce que** les moyens réversibles comprennent au moins deux vannes (126 à 129, 136, 137) permettant d'empêcher le deuxième fluide de circuler dans une première direction de circulation afin de transmettre, au sein de l'échangeur de chaleur (5), l'énergie thermique du premier fluide au deuxième fluide.

4. Module selon la revendication 1, **caractérisé en ce que** les moyens réversibles inversent de manière appropriée la direction de circulation du premier fluide au sein de l'échangeur de chaleur (5), une première direction de circulation du premier fluide permettant de transmettre, au sein de l'échangeur de chaleur (5), l'énergie thermique du premier fluide au deuxième fluide, et une deuxième direction de circulation du premier fluide permettant de transmettre, au sein de l'échangeur de chaleur (5), l'énergie thermique du deuxième fluide au premier fluide.

5. Module selon la revendication 4, **caractérisé en ce que** les moyens réversibles comprennent au moins un clapet (6, 16, 26, 106, 116) permettant d'empêcher le premier fluide de circuler dans ladite première direction de circulation.

6. Module selon la revendication 5, **caractérisé en ce que** les moyens réversibles comprennent un premier clapet anti-retour (7, 17) agencé de manière hydraulique en série avec le clapet (6, 16, 26), ledit premier clapet anti-retour (7, 17) permettant au premier fluide de circuler seulement dans la première direction de circulation.

7. Module selon les revendications 5 et 6, **caractérisé en ce que** le clapet (6, 26) et le premier clapet anti-retour (7) sont agencés en amont et en aval respectivement de l'échangeur de chaleur (5) dans la première direction de circulation du premier fluide.

8. Module selon les revendications 5 et 6, **caractérisé en ce que** le clapet (16) et le premier clapet anti-retour (17) sont agencés en aval et en amont respectivement de l'échangeur de chaleur (5) dans la première direction de circulation du premier fluide.

9. Module selon la revendication 5, **caractérisé en ce que** les moyens réversibles comprennent un deuxième clapet anti-retour (8) agencé sur un premier embranchement de dérivation (9) de manière hydraulique en parallèle par rapport au clapet (6, 16), ledit deuxième clapet anti-retour (8) autorisant le premier fluide à circuler seulement dans ladite deuxième direction de circulation en court-circuitant le clapet (6, 16) lorsqu'il empêche le premier fluide de circuler dans la première direction de circulation.

10. Module selon la revendication 6, **caractérisé en ce que** les moyens réversibles comprennent un troisième clapet anti-retour (18) agencé sur un deuxième embranchement de dérivation (19) de manière hydraulique en parallèle par rapport audit premier clapet anti-retour (7, 17), ledit troisième clapet anti-retour (18) autorisant le premier fluide à circuler seulement dans ladite deuxième direction de circulation en court-circuitant le premier clapet anti-retour (7, 17).

11. Module selon la revendication 4, **caractérisé en ce que** les moyens réversibles comprennent une pompe (10, 20, 110) autorisant le premier fluide à circuler dans ladite deuxième direction de circulation.

12. Module selon les revendications 9 et 11, **caractérisé en ce que** la pompe (10) est agencée sur le premier embranchement de dérivation (9) de manière hydraulique en série avec le deuxième clapet anti-retour (8).

13. Module selon les revendications 10 et 11, **caractérisé en ce que** la pompe (20) est agencée sur le deuxième embranchement de dérivation (19) de manière hydraulique en série avec le troisième clapet anti-retour (18).

14. Module selon la revendication 4, **caractérisé en ce que** les moyens réversibles comprennent un débitmètre volumétrique (11, 112) permettant de mesurer le volume du premier fluide circulant dans la deuxième direction de circulation.

15. Module selon les revendications 10 et 14, **caractérisé en ce que** ledit débitmètre volumétrique (11) est agencé sur le deuxième embranchement de dérivation (19) de manière hydraulique en série avec le troisième clapet anti-retour (18).

16. Module selon au moins l'une quelconque des revendications 3, 5 et 11, **caractérisé en ce que** les moyens réversibles comprennent une unité de commande (12) capable de générer une instruction de commande de clapet (6, 16, 26, 106, 116, 126 à 129, 136, 137) et/ou de pompe (10, 20, 110).

17. Module selon la revendication 1, **caractérisé en ce que** les moyens réversibles comprennent des capteurs de température (S₁) et (S₂) mesurant les températures T₁ et T₂ respectivement du deuxième fluide au niveau de la sortie et de l'entrée de l'échangeur de chaleur (5) et un capteur de température (S₅) mesurant la température T₅ du premier fluide dans une boucle chaude du réseau de chauffage public (2).

18. Procédé permettant d'inverser de manière appropriée la direction de transfert de chaleur de l'énergie thermique entre les deux circuits de fluide au sein de l'échangeur de chaleur (5) au moyen d'un module (1, 31, 41, 51, 61, 71, 91, 101, 111, 121, 131, 231, 271, 371) selon l'une quelconque des revendications précédentes, ledit procédé étant **caractérisé en ce qu'**il présente les étapes consistant à :
- comparer les températures T₁ et T₂ du deuxième fluide au niveau de la sortie et de l'entrée de l'échangeur de chaleur (5) respectivement par rapport aux valeurs de seuil Tₜₕ₁ et Tₜₕ₂ ;
- comparer la température T₂ du deuxième fluide avec la température du premier fluide T₅ dans la boucle chaude du réseau de chauffage public (2) ;
- générer l'instruction de commande de clapet (6, 16, 26) et/ou de pompe (10, 20) de manière à inverser de manière appropriée la direction de transfert de chaleur de l'énergie thermique au sein de l'échangeur de chaleur (5) et de manière à modifier la direction du transfert de chaleur au sein de l'échangeur de chaleur (5) dans la deuxième direction de transfert de chaleur.

19. Procédé selon la revendication 18, **caractérisé en ce que** la direction du transfert de chaleur au sein de l'échangeur de chaleur (5) est inversée de manière appropriée lorsque ladite température T₁ est supérieure à la valeur de seuil Tₜₕ₁ et lorsque la température T₂ est simultanément supérieure à la valeur de seuil Tₜₕ₂ et à la température T₅ du premier fluide.

20. Procédé selon au moins l'une quelconque des revendications 18 et 19, **caractérisé en ce que** l'instruction de commande de clapet (6, 16, 26, 126 à 129, 136, 137) et/ou de pompe (10, 20, 110) est fonction de la température T₁ du deuxième fluide au niveau de la sortie de l'échangeur de chaleur (5) et d'une température T₃ du premier fluide mesurée grâce à un capteur de température (S₃) agencé au niveau de l'entrée de l'échangeur de chaleur (5) dans la première direction de circulation du premier fluide.

21. Procédé selon la revendication 20, **caractérisé en ce que** l'instruction de commande de clapet (6, 16, 26, 126 à 129, 136, 137) et/ou de pompe (10, 20, 110) est fonction de la température T₇ du premier fluide mesurée grâce à un capteur de température (S₇) agencé dans la boucle chaude du réseau de chauffage public 2 en aval de la dérivation afin de fournir le premier fluide au module de transfert de chaleur 1 dans la première direction de circulation du premier fluide.
